# EUROPEAN PATENT SPECIFICATION

(11) **EP 4 365 720 B1**
(45) Date of publication and mention of the grant of the patent: **29.04.2026**
(21) Application number: 22851958.3
(22) Date of filing: 26.07.2022
(51) Int. Cl.: G06F 1/16, G06F 3/01, G06F 3/0481, G06F 3/0483

(54) **CONTROL METHOD AND APPARATUS FOR MULTIMEDIA CONTENT DISPLAY, ELECTRONIC DEVICE, AND MEDIUM**
STEUERUNGSVERFAHREN UND -VORRICHTUNG ZUR ANZEIGE VON MULTIMEDIAINHALTEN, ELEKTRONISCHE VORRICHTUNG UND MEDIUM
PROCÉDÉ ET APPAREIL DE COMMANDE POUR UN AFFICHEUR DE CONTENU MULTIMÉDIA, DISPOSITIF ÉLECTRONIQUE ET SUPPORT

(30) Priority: 04.08.2021 CN 202110893331
(43) Date of publication of application: 08.05.2024
(73) Proprietor: Beijing Zitiao Network Technology Co., Ltd., Beijing 100190 (CN)
(72) Inventor: YAO, Xue, Beijing 100086 (CN); SONG, Qing, Beijing 100086 (CN); SONG, Licong, Beijing 100086 (CN); SUN, Yu, Beijing 100086 (CN); LIAO, Honghui, Beijing 100086 (CN); ZHAO, Jingjing, Beijing 100086 (CN); LIU, Ji, Beijing 100086 (CN); JIN, Lei, Beijing 100086 (CN); YANG, Ling, Beijing 100086 (CN); WU, Mengqi, Beijing 100086 (CN)
(74) Representative: Marks & Clerk LLP
(86) International application number: PCT/CN2022/107799
(87) International publication number: WO 2023/011244

(56) References cited:
- EP-A1- 4 270 188
- EP-A1- 4 310 652
- CN-A- 103 645 844
- CN-A- 108 196 699
- CN-A- 108 628 515
- CN-A- 112 783 591
- CN-A- 113 031 842
- CN-A- 113 535 033
- CN-A- 114 489 336
- US-A1- 2014 337 791

## Description

### FIELD

The present application relates to the technical field of multimedia technology, and particularly relates to a control method and an apparatus for multimedia content display, an electronic device and a medium.

### BACKGROUND

With the rapid development of Internet technology, displaying a multimedia content in a multimedia application has become a common way to promote the multimedia content.

An existing multimedia application program can continuously push different multimedia streams to a user. When some multimedia streams are pushed, an anchor point is displayed on a pushed page of the multimedia stream; and the user can enter an extension page of the multimedia stream by clicking the anchor point to further leam a corresponding content of the multimedia stream or perform a further operation.

CN112783591A discloses an interaction method, interaction device, electronic equipment and storage medium. CN112783591A mainly discloses displaying a target page, wherein target content containing a target object is displayed in the target page. Then, a shaking trigger operation of a user may be received. Next, the associated content of the target content is displayed on the upper layer of the target page, and the detail page of the target object is displayed after the associated content is displayed. US20140337791A1 discloses mobile device interfaces. US20140337791A1 mainly discloses an example electronic device that includes sensors, such as multiple front-facing cameras to detect orientation and/or location of the electronic device relative to an object. Users of the device may perform gestures on the device by moving the device in-air and/or by moving their head, face, or eyes relative to the device. In response to these gestures, the device may perform operations. However, these documents do not mention much about the related technologies for an extension page of the multimedia stream.

However, with the prior art, there is little interest for user interaction.

### SUMMARY

To address or at least partially address the above-mentioned technical problems, the present disclosure provides a control method and an apparatus for multimedia content display, an electronic device and a medium.

In a first aspect of the present disclosure, a control method for multimedia content display is provided. The method comprises:

displaying a first multimedia content on a first page;

in response to a terminal device changing in a preset attitude, switching from the first page to a second page, the second page displaying a second multimedia content, the second multimedia content being an extension content of the first multimedia content.

Alternatively, the in response to a terminal device changing in a preset attitude, switching from the first page to a second page comprises:

in response to the terminal device changing in a preset attitude, switching from the first page to the second page when the preset attitude change satisfies a preset condition.

Alternatively, in response to the terminal device changing in the preset attitude, switching from the first page to the second page comprises:

in response to the terminal device changing in the preset attitude, triggering a first interactive picture and a second interactive picture to switch in a preset transition effect, and in a case where the preset attitude change satisfies a preset condition, switching from the first page to the second page.

Alternatively, the preset condition comprises:
a duration of the preset attitude change being equal to a first preset duration;
   or,
the number of times of triggering the first interactive picture and the second interactive picture to switch with in the preset transition effect being equal to the preset number of times;
   or,
a progress bar corresponding to the preset transition effect reaches a full bar state.

Alternatively, before switching from the first page to the second page in response to a terminal device changing in the preset attitude, the method further comprises:
displaying the first interactive picture on the first page after the first multimedia content displaying the second preset duration.

Alternatively, a prompt information is displayed below the first interactive picture displayed on the first page, and the prompt information is used for indicating triggering the terminal device to change in the preset attitude.

Alternatively, the method further comprises:
in response to triggering the first interactive picture or the second interactive picture, switching from the first page to a second page.

Alternatively, the method further comprises:
in response to a terminal device changing in a preset attitude, triggering a target interaction element to move in a preset direction.

Alternatively, changing in a preset attitude comprises: tilting to a preset angle in at least one preset direction.

Alternatively , tilting to a predetermined angle in at least one predetermined direction comprises: tilting to a preset angle in a leftward direction and a rightward direction respectively;
the first page also displaying a leftward progress bar and a rightward progress bar;
wherein in response to a terminal device changing in a preset attitude, triggering a first interactive picture and a second interactive picture to switch in a preset transition effect, comprises:
in response to the terminal device tilting a preset angle in the leftward direction while the first interactive picture tilting a preset angle in the leftward direction, and in response to the terminal device restoring a plane by tilting a preset angle in a left direction, triggering the first interactive picture to switch to a second interactive picture in a preset transition effect, the leftward progress bar filling a preset progress;
in response to a terminal device tilting a preset angle in a rightward direction while the second interactive picture tilting the preset angle in a rightward direction, and in response to the terminal device restoring a plane by tilting a preset angle in a right direction, triggering the second interactive picture to switch to a first interactive picture in a preset transition effect, the rightward progress bar filling a preset progress;
the preset condition comprising: the leftward progress bar and the rightward progress bar being both filled.

Alternatively, before switching from the first page to the second page in response to the terminal device changing in a preset attitude comprises:
determining the terminal device changing in a preset attitude by a gyroscope of the terminal device.

In a second aspect of the present disclosure, a control apparatus for multimedia content display is provided. The control apparatus comprises:
a display module for displaying a first multimedia content on a first page;
a processing module for in response to the terminal device changing in the preset attitude, switching from the first page to a second page, the second page displaying the second multimedia content, the second multimedia content being the extension content of the first multimedia content.

Alternatively, the processing module is used for, in response to the terminal device changing in the preset attitude, switching from the first page to the second page when the preset attitude change satisfies a preset condition

Alternatively, the processing module is used for, in response to the terminal device changing in the preset attitude, triggering the first interactive picture and the second interactive picture to switch in the preset transition effect, and in a case where the preset attitude change satisfies the preset condition, switching from the first page to the second page.

Alternatively, the preset condition comprises:
a duration of the preset attitude change being equal to the first preset duration;
   or,
the number of times of triggering a first interactive picture and a second interactive picture to switch with in the preset transition effect being equal to a preset number of times;
   or,
a progress bar corresponding to the preset transition effect reaching a full bar state.

Alternatively, the displaying module is further used for displaying the first interactive picture on the first page after the first multimedia content displaying the second preset duration

Alternatively, the prompt information is displayed below the first interactive picture displayed on the first page, and the prompt information is used for indicating triggering the terminal device to change in the preset attitude.

Alternatively, the processing module is further used for, in response to triggering the first interactive picture or the second interactive picture, switching from the first page to the second page.

Alternatively, the processing module is further used for, in response to the terminal device changing in the preset attitude, triggering the target interaction element to move in the preset direction.

Alternatively, the changing in the preset attitude comprises: tilting to the preset angle in at least one preset direction.

Alternatively, tilting to the predetermined angle in at least one predetermined direction comprises: tilting to the preset angle in the leftward direction and the rightward direction respectively.

The display module is further used for displaying the leftward progress bar and the rightward progress bar in the first page.

The processing module is further used for, in response to the terminal device tilting the preset angle in the leftward direction while the first interactive picture tilting the preset angle in the leftward direction, and in response to the terminal device restoring the plane by tilting the preset angle in the left direction, triggering the first interactive picture to switch to the a second interactive picture in the preset transition effect, the leftward progress bar filling the preset progress; in response to the terminal device tilting the preset angle in the rightward direction while the second interactive picture tilting the preset angle in the rightward direction, and in response to the terminal device restoring a plane by tilting the preset angle in a right direction, triggering the second interactive picture to switch to the first interactive picture in the preset transition effect, the rightward progress bar filling the preset progress.

The preset condition comprises: the leftward progress bar and the rightward progress bar being both filled.

Alternatively, the processing module is further used for determining the terminal device changing in the preset attitude by a gyroscope of the terminal device.

In a third aspect, the present disclosure provides an electronic device comprising: a processor for executing a computer program stored in a memory which, when executed by the processor, performs steps of the method of the first aspect.

In a fourth aspect, the present disclosure provides a computer-readable storage medium having, a computer program stored thereon which, when executed by a processor, performs steps of the method of any of the first aspect.

In a fifth aspect, the present disclosure provides a computer program product which, when run on a computer, causes the computer to carry out steps of the method of any of the first aspect.

The embodiments of the present disclosure provide at least the following advantages over the prior art:

By displaying a first multimedia content on a first page, in response to a terminal device changing in a preset attitude, switching from the first page to a second page, the second page displaying a second multimedia content, namely, by triggering the change of the attitude of the terminal device, switching from the first page to the second page is realized and the interest of user interaction is improved.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

In order to explain the embodiments of the present disclosure or the technical solutions in the prior art more clearly, the following simple description will be given to the accompanying drawings which are used in the embodiments or the description of the prior art; it would be obvious for a person skilled in the art to obtain other drawings according to these drawings without involving any inventive effort.
FIG. 1 illustrates a flow schematic diagram of a control method for multimedia content display according to the present disclosure;
FIG. 2A illustrates a schematic diagram of a first page according to the present disclosure;
FIG. 2B illustrates a schematic diagram of an attitude of a terminal device according to the present disclosure;
FIG. 2C illustrates a schematic diagram of another attitude of a terminal device according to the present disclosure;
FIG. 2D illustrates a schematic diagram of a second page according to the present disclosure;
FIG. 3 illustrates a flow schematic diagram of another control method for multimedia content display according to the present disclosure;
FIG. 4 illustrates a flow schematic diagram of yet another control method for multimedia content display according to the present disclosure;
FIG. 5A illustrates a schematic diagram of another first page according to the present disclosure;
Fig. 5B illustrates a schematic diagram of a page of a terminal device in yet another attitude according to the present disclosure;
Fig. 5C illustrates a schematic diagram of a page of a terminal device in yet another attitude according to the present disclosure;
FIG. 5D illustrates a schematic diagram of another second page according to the present disclosure;
FIG. 6 illustrates a flow schematic diagram of yet another control method for multimedia content display according to the present disclosure;
FIG. 7 illustrates a schematic diagram of yet another first page according to the present disclosure;
FIG. 8A illustrates a schematic diagram of yet another first page according to the present disclosure;
FIG. 8B illustrates a schematic diagram of a page of a terminal device in yet another attitude according to the present disclosure;
FIG. 8C illustrates a schematic diagram of a page of a terminal device in yet another attitude according to the present disclosure;
FIG. 8D illustrates a schematic diagram of a page of a terminal device in yet another attitude according to the present disclosure;
FIG. 8E illustrates a schematic diagram of a page of a terminal device in yet another attitude according to the present disclosure;
FIG. 9 illustrates a flow schematic diagram of yet another control method for multimedia content display according to the present disclosure;
FIG. 10 illustrates a schematic diagram of yet another first page according to the present disclosure;
FIG. 11 illustrates a schematic diagram of yet another first page according to the present disclosure;
FIG. 12 illustrates a structural schematic diagram of a control apparatus for multimedia content display according to the present disclosure.

### DETAILED DESCRIPTION OF EMBODIMENTS

In order that the foregoing objects, features and advantages of the present disclosure may be more clearly understood, a more particular description of the embodiments of the present disclosure will be rendered. It should be noted that embodiments and features of embodiments of the present disclosure may be combined with each other without conflict.

In the following description, numerous specific details are set forth in order to provide a thorough understanding of the present disclosure, but the present disclosure may be practiced otherwise than as specifically described herein. It should be understood that the embodiments in the description are only a part of the embodiments of the disclosure, not all of them.

The technical solution of the present disclosure can be applied to the terminal device having a display screen, and the display screen may or may not be a touch screen, wherein the terminal device may comprise a tablet, a mobile phone, a wearable electronic device, a smart home device or other terminal devices, etc. The terminal device is equipped with a multimedia Application (App) that can display multimedia content. The multimedia content in the present disclosure may be an advertisement, an item introduction, a questionnaire or an event introduction, etc. for which the present disclosure is not limited.

In the process of playing the multimedia content by the multimedia application program, the technical solution of the present disclosure can trigger switching from a push page of the multimedia content to an extension page of the multimedia content through an attitude change of the terminal device, thereby improving the interest of user interaction. In addition, by triggering the page switching through the attitude change of the terminal device, the user's intention can be expressed more precisely, and it is not easy to trigger the page switching due to an erroneous operation. Besides, a single-hand operation can be realized by triggering the page switching through the attitude change of the terminal device, so as to improve the convenience of page switching, especially for a large-screen terminal device. Moreover, page switching is triggered by an attitude change of the terminal device, and an application scenario is expanded, for example, applied to a non-touch screen terminal device.

The following describes the technical solution of the present disclosure by taking several embodiments as examples.

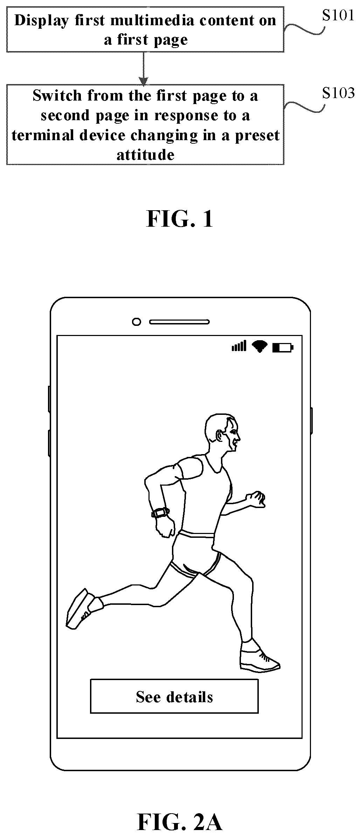

FIG. 1 illustrates a flow schematic diagram of a control method for multimedia content display according to the present disclosure. The present embodiment is executed by the terminal device. As shown in FIG. 1, the method of the present embodiment is as follows:
S101: displaying first multimedia content on a first page.

In the process of applying the multimedia application by the user, the multimedia application will push the multimedia content to the user. As shown in FIG. 2A, FIG. 2A illustrates a schematic diagram of a first page according to the present disclosure.

The first multimedia content may be a picture or a video, for which the present disclosure is not limited.

The first multimedia content is equivalent to a guide content, from which the user has a preliminary understanding of the content. If the user is interested in the first multimedia content, and wants to know more contents related to the first multimedia content or performs a further operation, namely, wants to know the extended content of the first multimedia content, then there needs to enter a display page of the extended content. In order to facilitate description, the present disclosure describes the extended content of the first multimedia content as the second multimedia content, and describes a page displaying the first multimedia content as the first page (as shown in FIG. 2A) and describes a page displaying the second multimedia content as the second page.

S103: switching from the first page to a second page in response to a terminal device changing in a preset attitude.

The second page displays the second multimedia content, and the second multimedia content is the extension content of the first multimedia content.

When the user is interested in the first multimedia content, a switch can be made from the first page to the second page by triggering the terminal device to change in the preset attitude.

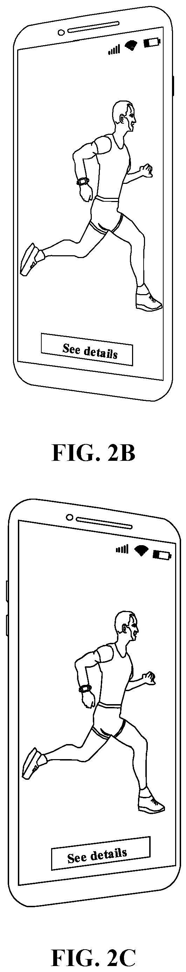

The preset attitude may be left-right tilt, rotation, shaking, or the like, and the present disclosure is not limited thereto. Taking left-right tilt as an example, the user tilts a terminal to the left as shown in FIG. 2B (FIG. 2B illustrates a schematic diagram of an attitude of a terminal device according to the present disclosure), then reverses back, and tilts to the right as shown in FIG. 2C, and FIG. 2C illustrates a schematic diagram of another attitude of a terminal device according to the present disclosure.

Alternatively, the preset attitude may refer to an action or an action satisfying a certain requirement. For example, the preset attitude may be left-right tilt, and if the terminal device is tilted to the left or right, it can be considered that the terminal device changes in the preset attitude. For another example, the preset attitude may be tilting to the preset angle along at least one preset direction, e.g., the preset attitude may be left-right tilt of the terminal device of more than 10 degrees. The terminal device tilting leftward or rightward of more than 10 degrees, it can be considered that the terminal device changes in the preset attitude, otherwise, the terminal device is not considered to change in the preset attitude. Likewise, the rotation may also define the direction of rotation and/or the speed of rotation, etc. The shaking may define the amplitude or the frequency of the shaking, or the like. By defining the preset attitude, it is possible to reduce the user's erroneous operation to trigger page switching.

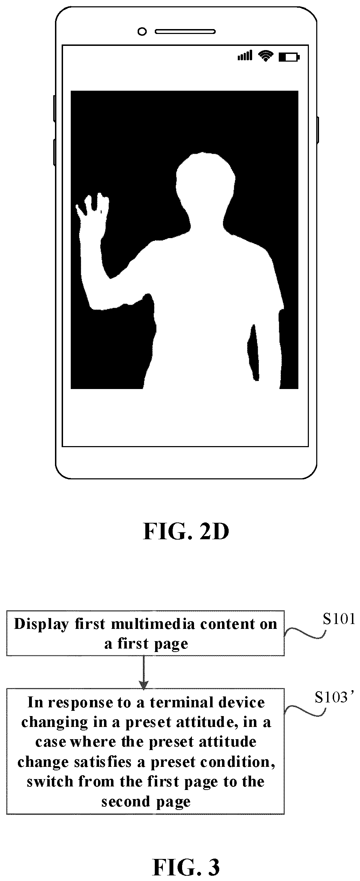

When the user triggers the terminal device to change in the preset attitude, in response to the terminal device changing in the preset attitude, the first page is switched to the second page and the second multimedia content is displayed on the second page as shown in FIG. 2D, and FIG. 2D illustrates a schematic diagram of a second page according to the present disclosure. Thus, the user is made aware of the second multimedia content through the second page.

Taking an advertisement as an example, FIG. 2A can be understood as a leading page of the advertisement, and FIG. 2D can be understood as a landing page of the advertisement; FIG. 2B and FIG. 2C illustrate schematic diagrams of the attitude change of the terminal device during a handover from the guide page to the landing page.

In this embodiment, the first multimedia content is displayed on the first page, and the first page is switched to the second page in response to the terminal device changing in the preset attitude, and the second multimedia content is displayed on the second page, namely, switching from the first page to the second page is realized by triggering the attitude change of the terminal device and the interest of user interaction is improved.

It will be appreciated that in the embodiment shown in FIG. 1, one possible implementation of S103 may be: as long as the terminal device is triggered to change in the preset attitude, switching from the first page to the second page, for example, as long as the terminal device tilts left and right, switching from the first page to the second page.

Another possible implementation of S103 is S103' as shown in FIG. 3.

S103': in response to the terminal device changing in the preset attitude, switching from the first page to the second page in a case where the preset attitude change satisfies the preset condition

The preset conditions include, but are not limited to, the following possible implementations:
One possible implementation is: the duration of the preset attitude change is equal to the first preset duration,
Alternatively, the first preset time period may be a time period during which the terminal device is triggered to change in the preset attitude once counted. The first preset duration is assumed to be 2s. For example, when the terminal device starts timing with a preset attitude change, and the preset attitude change lasts for 2s, the preset attitude change is considered to satisfy the preset condition, and the terminal device switches from the first page to the second page.

Alternatively, the first preset time period may be a cumulative time period of the preset attitude change. The first preset duration is assumed to be 2s. For example, in the process of the user displaying the first multimedia content on the first page, the user triggers the terminal device to change in the preset attitude, but the change in the preset attitude only lasts for 1 s, and the user slides the first page up or down and slides to other pages; when the user slides back to the first page again from other pages, the user again triggers the terminal device to change in the preset attitude, then timing is started from 1 s at this moment, and the preset attitude change continues for another 1 s, then the preset attitude change is considered to satisfy the preset condition, and the terminal device switches from the first page to the second page.

This is equivalent to the case where the user can trigger the change of the terminal device in a preset attitude one or more times, so that the total duration of the change of the terminal device in the preset attitude is equal to the first preset duration, then it is considered that the change in the preset attitude satisfies a preset condition, a first page is switched to the second page.

This embodiment further reduces page switching caused by an erroneous operation by switching from the first page to the second page in response to the terminal device changing in the preset attitude in a case where the preset attitude change satisfies the preset condition. In addition, it is required to switch from the first page to the second page only when the preset attitude change satisfies the preset condition, so as to enhance the user's interactive ritual feeling, improve the interactivity and increase the interest.

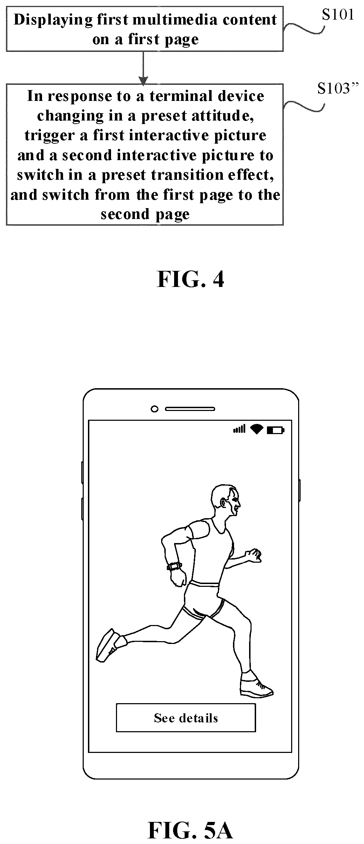

In order to further increase interest, on the basis of the embodiment shown in FIG. 1, a further possible implementation of S103 is as follows: S103", as shown in FIG. 4:
S103": in response to the terminal device changing in the preset attitude, the first interactive picture and the second interactive picture are triggered to switch in the preset transition effect, and the first page is switched to the second page.

The first interactive picture and the second interactive picture can be two different pictures related to the first multimedia content, and may also be two different pictures which are not related to the first multimedia content, with the aim of increasing interest of the interaction through the preset transition effect of the first interactive picture and the second interactive picture.

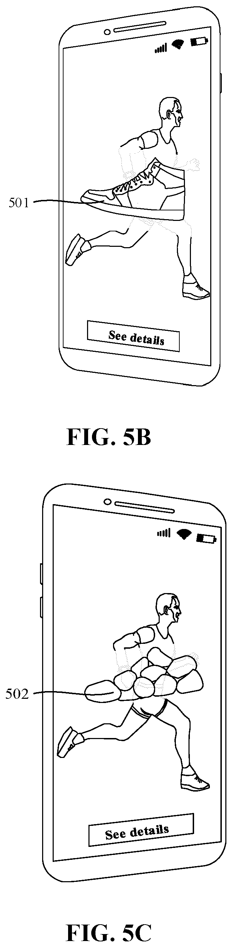

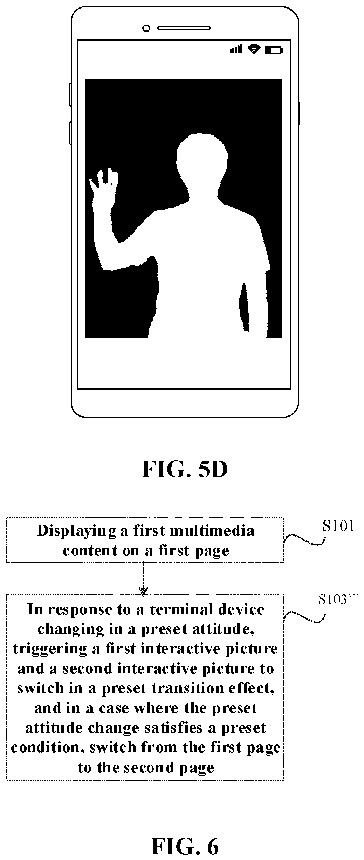

That is, when the terminal device changes in the preset attitude, as the attitude of the terminal device changes, an animation in which the first interactive picture and the second interactive picture are switched in the preset transition effect is also displayed on the first page. As shown in FIGS. 5A-5D, Fig. 5A illustrates a schematic diagram of another first page according to the present disclosure; Fig. 5B illustrates a schematic diagram of a page of the terminal device in yet another attitude according to the present disclosure, comprising: a first interactive picture 501; Fig. 5C illustrates a page schematic diagram in yet another attitude of the terminal device according to the present disclosure, comprising: a second interactive picture 502; FIG. 5D illustrates a schematic diagram of another second page according to the present disclosure.

The transition effect includes, but are not limited to, the following possible implementations:
A dual color or multi-color fault line, a snowflake fault line, and a target interaction element move in a preset direction, wherein the two-line or multi-color fault line refers to displaying a line with two or more colors around a first interaction picture or a second interaction picture in the process of transferring; the snowflake fault line refers to a line showing a snowflake shape around the first interactive picture or the second interactive picture during the transition; moving a target interactive element in a preset direction refers to some interactive elements related to the first multimedia content, and moving in a plane direction of a space or moving in a depth direction of the space during the transition of the first interactive picture or the second interactive picture.

In this embodiment, in response to the terminal device changing in the preset attitude, the first interactive picture and the second interactive picture are triggered to switch in the preset transition effect. That is to say, as the attitude of the terminal device changes, an animation of the first page interactive picture and the second page interactive picture switching in the preset transition effect is also displayed on the first page, further increasing the interest of the interaction and improving the user's viscosity.

On the basis of the embodiment shown in FIG. 4, further, a possible implementation S103‴ of S103 " is as shown in FIG. 6.

S103‴: in response to a terminal device changing in the preset attitude, first interactive picture and the second interactive picture are triggered to switch in the preset transition effect, and in a case where the preset attitude change satisfies the preset condition, the first page is switched to the second page.

Reference is taken to the detailed description of the embodiment shown in FIG. 4 for triggering the first interactive picture and the second interactive picture to switch in a preset transition effect, and reference is taken to the description of the embodiment shown in FIG. 3 for the preset attitude changing satisfying a preset condition.

The preset condition may include, but are not limited to, the following possible conditions in addition to the preset condition described in the embodiment shown in FIG. 3:
The one is: the number of times of triggering the first interactive picture and the second interactive picture to switch with the preset transition effect is equal to the number of preset times, and taking the preset attitude as left-right tilt as an example, it is assumed that: the terminal device tilts leftward from the plane and then returns to the plane to trigger one transition effect, and tilts rightward from the plane and then returns to the plane to trigger one transition effect again. Multiple transition effects can be triggered through multiple back-and-forth tilts, and the number of preset times can be set as 10 times. When the number of times of triggering the first interactive picture and the second interactive picture to switch with the preset transition effect is equal to 10 times, the terminal device is considered to satisfy the preset condition with the preset attitude change, and to switch from the first page to the second page. Alternatively, the number of preset times may be a cumulative number of times, similar to the cumulative time period, and this will not be described in detail herein.

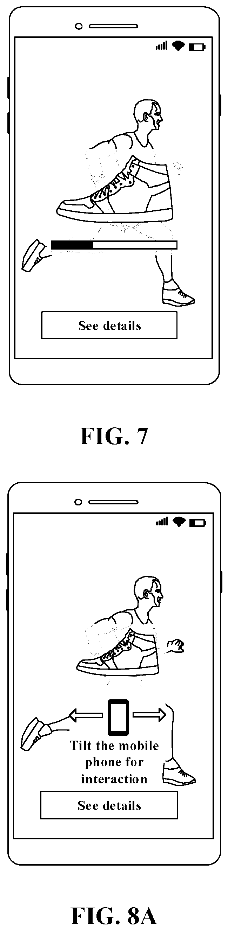

The another is: A progress bar corresponding to the preset transition effect is also displayed on the first page as shown in FIG. 7, and FIG. 7 shows the progress bar corresponding to the preset transition effect. As the number of the preset transition effect increases, the progress bar gradually fills up; and when the progress bar reaches the state of full bar, it is considered that the terminal device satisfies the preset condition with the change of the preset attitude, and switches from the first page to the second page. Alternatively, the progress bar may be cumulative, similar to the cumulative duration, and this will not be described in detail herein.

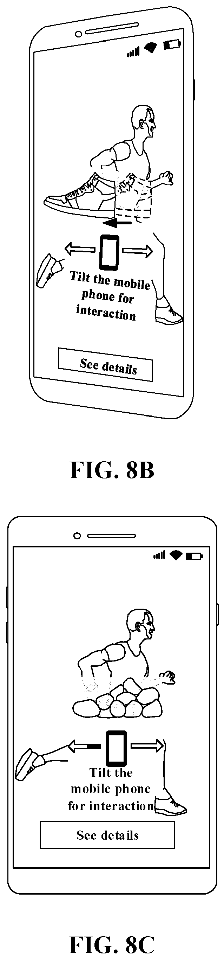

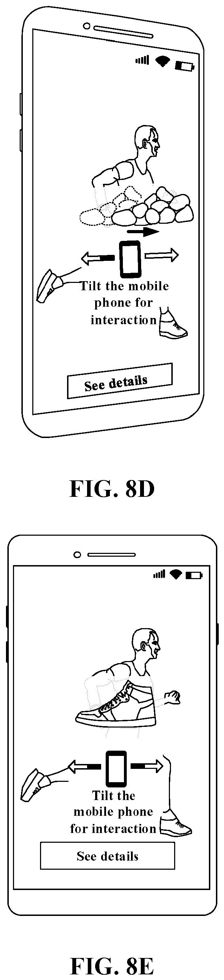

Yet another is: A leftward progress bar and a rightward progress bar are also displayed on the first page. As shown in FIG. 8A, taking the preset attitude tilting to a preset angle in the left direction and the right direction respectively as an example, it is assumed that: the terminal device tilts from the plane to the left to the preset angle, and the first interactive picture moves to tilt to the left, as shown in FIG. 8B; the terminal device tilts from the left and then returns to the plane to trigger one transition effect; the first interactive picture switches to the second interactive picture with the preset transition effect, and the leftward progress bar fills the preset progress, as shown in FIG. 8C; the terminal device continues to tilt from the plane to the right to the preset angle, and the second interactive picture moves to tilt to the right, as shown in FIG. 8D; the terminal device tilts from the right and then returns to the plane to trigger one transition effect again; the second interactive picture is switched to the first interactive picture with the preset transition effect, and the rightward progress bar fills the preset progress, as shown in FIG. 8E. The above-mentioned operations are repeated until both the leftward progress bar and the rightward progress bar are in a filled state, namely, a preset condition is satisfied, and the first page is switched to the second page. Alternatively, the preset progress can be a 1/2 progress bar, a 1/3 progress bar, a 1/N progress bar, etc. and can be flexibly set according to actual situations. The above-mentioned embodiment exemplarily describes that the attitude of the terminal device changes repeatedly until both the leftward progress bar and the rightward progress bar are filled with a cycle of firstly tilting to the left and then tilting to the right. In practical applications, the terminal device can also change repeatedly until both the leftward progress bar and the rightward progress bar are filled with a cycle of firstly tilting to the right and then tilting to the left; alternatively, the attitude of the terminal device may be repeatedly tilted to one side until the progress bar corresponding to the one side is filled, and then repeatedly tilted to the other side until the progress bar corresponding to the other side is also filled. The order of tilting to the left and tilting to the right is not particularly limited in this embodiment.

In this embodiment, in response to a terminal device changing in a preset attitude, a first interactive picture and a second interactive picture are triggered to switch in a preset transition effect, and in a case where the preset attitude change satisfies a preset condition, the first page is switched to the second page, that is to say, as the attitude of the terminal device changes, the animation of the first page interactive picture and the second page interactive picture switching with the preset transition effect is also displayed on the first page, further increasing the interest of the interaction. In addition, in a case where the preset attitude change satisfies the preset condition, the first page is switched to the second page; the user's interactive ritual is improved, the page switching caused by erroneous operation is reduced, the user' s experience is improved, and the user's viscosity is further improved.

In the above-mentioned embodiments, optionally, the playing of the first multimedia content is not stopped while the animation that the first page interactive picture and the second page interactive picture are switched with the preset transition effect is displayed on the first page.

Alternatively, in the above-mentioned embodiment, if the attitude of the terminal device does not change with the preset attitude, the preset transition effect is not triggered, but the first interactive picture will display the preset display effect along with the attitude change of the terminal device, for example, the preset attitude change is greater than 10 degrees of left-right tilt, and only greater than 10 degrees of left-right tilt will trigger the preset transition effect, and the first interactive picture is switched to the second interactive picture; if the left-right tilt is less than 10 degrees, the first picture displays the preset display effect as the attitude of the terminal device changes, and the preset display effect may be, for example, shaking, that is to say, the first interactive picture is triggered to shake as the terminal device tilts to the left or to the right, and the frequency of the shake may be fixed, and may also be related to the tilting speed of the terminal device, etc. for example, the faster the tilting speed is, the stronger the shaking is, and the slower the tilting speed is, the slower the shaking is.

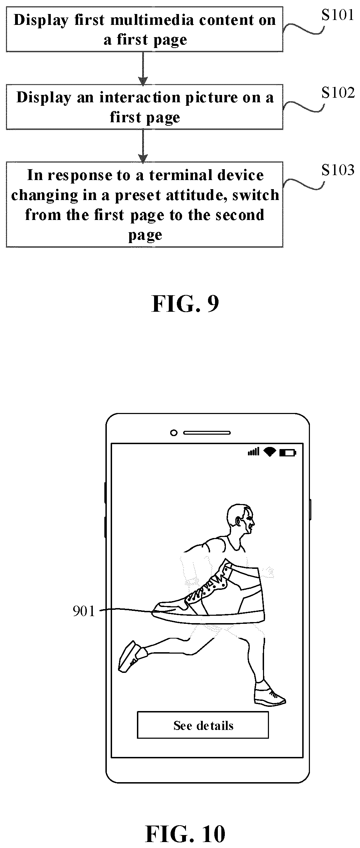

Optionally, in each of the above embodiments, prior to S103, S102 may also be included, as shown in FIG. 9:
S102: the first interactive picture is displayed on the first page.

Alternatively, the first multimedia content may start to be displayed, namely, displaying the first interactive picture on the first page, as shown in FIG. 10, and FIG. 10 comprises: a first interactive picture 901.

The first interactive picture may also be displayed on the first page after the first multimedia content is displayed for the second preset duration. For example, the user displays the first multimedia content on the first page by opening the multimedia application and then displaying the first page, or the first multimedia content is displayed on the first page by sliding displaying the first page within the multimedia application, and displays the first interactive picture on the first page after the first multimedia content is displayed 3s.

By displaying the first interactive picture, the user can leam that the preset transition effect of the first interactive picture and the second interactive picture can be triggered by triggering the attitude change of the terminal device. That is, the user can be instructed through the first interactive picture that the first page can change the preset transition effect of the first interactive picture and the second interactive picture through the attitude of the terminal device.

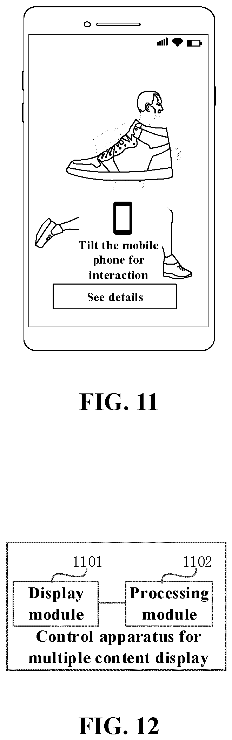

Optionally, the preset transition effects of the first interactive picture and the second interactive picture can be changed by means of the attitude of the terminal device in order to further more clearly indicate the first page to the user. Prompt information may also be displayed under the first interactive picture, as shown in FIG. 11, so as to indicate to trigger the terminal device to change in the preset attitude, for example, the prompt information may be: left-right tilt triggers special effects.

Alternatively, the prompt information displayed under the first interactive picture may be displayed only when the user first enters the first page, and may not be displayed when the user does not first enter the first page, so as to improve the simplicity of the first page.

Alternatively, in each of the above-mentioned embodiments, in addition to switching from the first page to the second page by the terminal device changing in a preset attitude, the present disclosure also provides other methods, for example: switching from a first page to a second page by triggering a first interactive picture or a second interactive picture, for example, clicking the first interactive page, directly switching from the first page to the second page without the terminal device changing in a preset attitude; the present disclosure increases the flexibility of page switching by providing multiple ways to trigger page switching.

Alternatively, in each of the above-described embodiments, the change in the preset attitude of the terminal device may be determined by the gyroscope of the terminal device.

FIG. 12 illustrates a structural schematic diagram of a control apparatus for multimedia content display according to the present disclosure, as shown in FIG. 12, comprising: a display module 1101 and a processing module 1102.

The display module 1101 for displaying the first multimedia content on the first page;

The processing module 1102 for, in response to terminal device changing in a preset attitude, switches from the first page to a second page, the second page displaying a second multimedia content, the second multimedia content being an extension content of the first multimedia content

Optionally, the processing module 1102 is specifically used for, in response to the terminal device changing in a preset attitude, switching from the first page to the second page when the preset attitude change satisfies a preset condition.

Optionally, the processing module 1102 is specifically used for, in response to a terminal device changing in a preset attitude, triggering a first interactive picture and a second interactive picture to switch in a preset transition effect, and in a case where the preset attitude change satisfies a preset condition, switching from the first page to the second page.

Optionally, the preset condition comprises:

The duration of the preset attitude change is equal to the first preset duration;

Alternatively,

The number of times of triggering the first interactive picture and the second interactive picture to switching a preset transition effect is equal to the number of preset times;

Alternatively,
the progress bar corresponding to the preset transition effect reaches the full bar state.

Optionally, the display module 1101 is further used for displaying the first interactive picture on the first page after the first multimedia content displaying the second preset duration.

Optionally, a prompt information is displayed below a first interactive picture displayed on the first page, and the prompt information is used for indicating triggering the terminal device to change in the preset attitude.

Optionally, the processing module 1102 is further used for, in response to triggering to the first interactive picture or the second interactive picture, switching from the first page to a second page.

Optionally, the processing module 1102 is further used for, in response to the terminal device changing in the preset attitude, triggering a target interaction element to move in the preset direction.

Optionally, the changing in a preset attitude comprises: tilting to the preset angle in at least one preset direction.

Optionally, the tilting to the preset angle in at least one preset direction comprises: tilting to the preset angle in each of the leftward direction and the rightward direction;
The display module 1101 is also used for displaying the leftward progress bar and the rightward progress bar on the first page also;
The processing module 1102 is further used for, in response to the terminal device tilting a preset angle in the leftward direction while the first interactive picture tilting the preset angle in the leftward direction, and in response to the terminal device restoring the plane from tilting the preset angle in a left direction, triggering the first interactive picture to switch to a second interactive picture in the preset transition effect, the leftward progress bar filling a preset progress; in response to the terminal device tilting the preset angle in the rightward direction while the second interactive picture tilting the preset angle in the rightward direction, in response to the terminal device restoring the plane from tilting a preset angle in a right direction, triggering the second interactive picture to switch to a first interactive picture in the preset transition effect, the rightward progress bar filling the preset progress

The preset condition comprises: the leftward progress bar and the rightward progress bar are both filled.

Optionally, the processing module 1102 is further used for determining the terminal device changing in a preset attitude by a gyroscope of the terminal device.

The device of the present embodiment corresponds to the technical solution that can be used to execute the above-mentioned various method embodiments, and the implementation principles and technical effects thereof are similar, and will not be described in detail herein.

The present disclosure also provides an electronic device comprising: a processor for executing a computer program stored in a memory, and the computer program, when executed by a processor, carries out the steps of the method as described in the above embodiments of the method.

The present disclosure also provides a computer-readable storage medium having stored thereon a computer program which, when executed by a processor, performs the steps of the methods described in the above method embodiments.

The present disclosure also provides a computer program product, which when run on a computer, causes the computer to perform the steps of the methods described in the above method embodiments.

It is noted that relational terms such as "first", "second", and the like may be used solely to distinguish one entity or operation from another entity or operation without necessarily requiring or implying any actual such relationship or order between such entities or operations herein. Furthermore, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a... " does not, without more constraints, preclude the existence of additional identical elements in the process, method, article, or apparatus that comprises the element.

The previous description of the disclosed embodiments is provided to enable any person skilled in the art to make or use the present disclosure. Various modifications to these embodiments will be readily apparent to those skilled in the art, and the generic implementations defined herein may be implemented in other embodiments without departing from the scope of the disclosure. The invention is defined by the appended independent claims. Preferred embodiments are set out in the dependent claims. Embodiments that do not fall within the scope of the claims do not describe part of the invention.

## Claims

1. A control method for multimedia content display, comprising:
displaying (S101) a first multimedia content on a first page;
in response to a terminal device changing in a preset attitude, triggering a first interactive picture and a second interactive picture to switch in a preset transition effect;
in response to the preset attitude change satisfying a preset condition, switching (S103) from the first page to a second page, the second page displaying a second multimedia content, the second multimedia content being an extension content of the first multimedia content; and
in response to the terminal device changing with an attitude different from the preset attitude, displaying a preset display effect along with the attitude change of the terminal device in the first interactive picture without triggering the preset transition effect;
wherein the preset condition comprises:
a duration of the preset attitude change being equal to a first preset duration; or
the number of times of triggering a first interactive picture and a second interactive picture to switch in a preset transition effect being equal to a number of preset times, the number of preset times being a cumulative number of times for switching in a preset transition effect; or
a progress bar corresponding to the preset transition effect reaching a full bar state.

2. The method of claim 1, wherein in response to the terminal device changing in the preset attitude, switching from the first page to the second page comprises:
in response to the terminal device changing in the preset attitude, switching from the first page to the second page in a case where the preset attitude change satisfies a preset condition.

3. The method of claim1, wherein before switching from the first page to the second page in response to the terminal device changing in the preset attitude, the method further comprises:
displaying the first interactive picture on the first page after displaying the first multimedia content for a second preset duration.

4. The method of claim 3, wherein a prompt information is displayed below a first interactive picture displayed on the first page, and the prompt information is used for indicating triggering the terminal device to change in the preset attitude.

5. The method of claim1, wherein the method further comprises:
in response to triggering the first interactive picture or the second interactive picture, switching from the first page to a second page.

6. The method of claim 1, wherein the method further comprises:
in response to the terminal device changing in a preset attitude, triggering a target interaction element to move in a preset direction.

7. The method as claimed in claim 1, wherein changing in the preset attitude comprises: tilting to a preset angle in at least one preset direction.

8. The method of claim 7, wherein tilting to a preset angle in at least one preset direction comprises: tilting to a preset angle in a leftward direction and a rightward direction respectively;
the first page also displaying a leftward progress bar and a rightward progress bar; and
wherein in response to a terminal device changing in the preset attitude, triggering a first interactive picture and a second interactive picture to switch in a preset transition effect, comprises:
in response to the terminal device tilting a preset angle in a leftward direction while tilting the first interactive picture a preset angle in a leftward direction, and in response to the terminal device being returned to an initial attitude from tilting a preset angle in a leftward direction, triggering the first interactive picture to switch to a second interactive picture in a preset transition effect, the leftward progress bar filling a preset progress; and
in response to a terminal device tilting a preset angle in a rightward direction while tilting the second interactive picture the preset angle in a rightward direction, and in response to the terminal device being returned to an initial attitude from tilting a preset angle in a rightward direction, triggering the second interactive picture to switch to a first interactive picture in a preset transition effect, the rightward progress bar filling a preset progress; and
wherein the preset condition comprises: the leftward progress bar and the rightward progress bar being both filled.

9. The method of claim 1 or 2, wherein before switching from the first page to the second page in response to the terminal device changing in the preset attitude, the method further comprises:
determining the terminal device changing in the preset attitude by a gyroscope of the terminal device.

10. An electronic device comprising: a processor for executing a computer program stored in a memory which, when executed by the processor, performs the steps of the method of any of claims 1-9.

11. A computer-readable storage medium having a computer program stored which, when executed by a processor, performs the steps of the method of any one of claims 1-9.

12. A computer program product which, when run on a computer, causes the computer to perform the steps of the method of any of claims 1-9.

## Patentansprüche

1. Steuerungsverfahren für die Anzeige von Multimedia-Inhalten, umfassend:
Anzeigen (S101) eines ersten Multimedia-Inhalts auf einer ersten Seite;
Auslösen, als Reaktion auf eine Änderung eines Endgeräts in einer voreingestellten Lage, das Umschalten eines ersten interaktives Bilds und eines zweiten interaktiven Bilds in einem voreingestellten Übergangseffekt;
Umschalten (S103), als Reaktion darauf, dass die voreingestellte Lageänderung eine voreingestellte Bedingung erfüllt, von der ersten Seite zu einer zweiten Seite, wobei die zweite Seite einen zweiten Multimedia-Inhalt anzeigt, wobei der zweite Multimedia-Inhalt einen Erweiterungsinhalt des ersten Multimedia-Inhalts ist; und
Anzeigen, als Reaktion auf eine Änderung eines Endgeräts in einer Lage, die von der voreingestellten Lage abweicht, im ersten interaktiven Bild, eines voreingestellten Anzeigeeffekt zusammen mit der Lageänderung des Endgeräts, ohne den voreingestellten Übergangseffekt auszulösen;
wobei die voreingestellte Bedingung Folgendes umfasst:
eine Dauer der voreingestellten Lageänderung einer ersten voreingestellten Dauer entspricht; oder
die Anzahl der Auslösungen eines ersten und eines zweiten interaktiven Bildes zum Umschalten in einem voreingestellten Übergangseffekt einer voreingestellten Anzahl entspricht, wobei die voreingestellte Anzahl eine kumulative Anzahl des Umschaltens in einem voreingestellten Übergangseffekt ist; oder
ein Fortschrittsbalken, der dem voreingestellten Übergangseffekt entspricht, einen vollen Balken erreicht.

2. Verfahren nach Anspruch 1, wobei als Reaktion auf eine Änderung eines Endgeräts in einer voreingestellten Lage, das Umschalten von der ersten zur zweiten Seite Folgendes umfasst:
Umschalten, als Reaktion auf eine Änderung eines Endgeräts in einer voreingestellten Lage, von der ersten Seite zur zweiten Seite, wenn die voreingestellte Lageänderung eine voreingestellte Bedingung erfüllt.

3. Verfahren nach Anspruch 1, wobei das Verfahren vor dem Umschalten von der ersten zur zweiten Seite, als Reaktion auf eine Änderung eines Endgeräts in einer voreingestellten Lage, Folgendes umfasst:
Anzeigen des ersten interaktiven Bilds auf der ersten Seite, nachdem der erste Multimedia-Inhalt für eine zweite voreingestellte Dauer angezeigt wurde.

4. Verfahren nach Anspruch 3, wobei unterhalb eines ersten interaktiven Bildes, das auf der ersten Seite angezeigt wird, eine Aufforderungsinformation angezeigt wird und die Aufforderungsinformation dazu dient, das Auslösen die Änderung des Endgeräts in der voreingestellten Lage anzuzeigen.

5. Verfahren nach Anspruch 1, wobei das Verfahren ferner Folgendes umfasst:
Umschalten, als Reaktion auf das Auslösen des ersten oder zweiten interaktiven Bildes, von der ersten Seite zur zweiten Seite.

6. Verfahren nach Anspruch 1, wobei das Verfahren ferner Folgendes umfasst:
Auslösen, als Reaktion auf eine Änderung eines Endgeräts in einer voreingestellten Lage, eines Zielinteraktionselements, sich in eine voreingestellte Richtung zu bewegen.

7. Verfahren nach Anspruch 1, wobei die Änderung in der voreingestellten Lage Folgendes umfasst: Neigen um einen voreingestellten Winkel in mindestens einer voreingestellten Richtung.

8. Verfahren nach Anspruch 7, wobei das Neigen um einen voreingestellten Winkel in mindestens einer voreingestellten Richtung Folgendes umfasst: Neigen um jeweils einen voreingestellten Winkel in einer Richtung nach links bzw. in einer Richtung nach rechts;
auf der ersten Seite ferner ein Fortschrittsbalken nach links und ein Fortschrittsbalken nach rechts angezeigt wird; und
wobei, als Reaktion auf eine Änderung eines Endgeräts in einer voreingestellten Lage, das Auslösen eines Umschaltens eines ersten und eines zweiten interaktiven Bilds in einem voreingestellten Übergangseffekt umfasst:
als Reaktion darauf, dass das Endgerät um einen voreingestellten Winkel in einer Richtung nach links geneigt wird, während gleichzeitig das erste interaktive Bild um einen voreingestellten Winkel in einer Richtung nach links geneigt wird, und als Reaktion darauf, dass das Endgerät nach der Neigung um einen voreingestellten Winkel in einer Richtung nach links wieder in eine Ausgangsposition zurückkehrt, Auslösen des Umschaltens des ersten interaktiven Bilds in einem voreingestellten Übergangseffekt zu einem zweiten interaktiven Bild, wobei der Fortschrittsbalken nach links einen voreingestellten Fortschritt erreicht; und
als Reaktion darauf, dass ein Endgerät um einen voreingestellten Winkel in einer Richtung nach rechts geneigt wird, während gleichzeitig das zweite interaktive Bild um den voreingestellten Winkel in einer Richtung nach rechts geneigt wird, und als Reaktion darauf, dass das Endgerät nach der Neigung um einen voreingestellten Winkel in einer Richtung nach rechts wieder in eine Ausgangsposition zurückkehrt, Auslösen des Umschaltens des zweiten interaktiven Bilds in einem voreingestellten Übergangseffekt zu einem ersten interaktiven Bild, wobei der Fortschrittsbalken nach rechts einen voreingestellten Fortschritt erreicht; und
wobei die voreingestellte Bedingung Folgendes umfasst: dass sowohl der Fortschrittsbalken nach links und der Fortschrittsbalken nach rechts gefüllt sind.

9. Verfahren nach Anspruch 1 oder 2, wobei das Verfahren vor dem Umschalten von der ersten zur zweiten Seite als Reaktion auf eine Änderung eines Endgeräts in einer voreingestellten Lage Folgendes umfasst:
Bestimmen, dass das Endgerät in der voreingestellten Lage durch ein Gyroskop des Endgeräts ändert.

10. Elektronische Vorrichtung, umfassend: einen Prozessor zur Ausführung eines im Speicher abgelegten Computerprogramms, das es von einem Prozessor ausgeführt wird, die Schritte des Verfahrens nach einem der Ansprüche 1-9 ausführt.

11. Computerlesbares Speichermedium, auf dem ein Computerprogramm gespeichert ist, das, wenn es von einem Prozessor ausgeführt wird, die Schritte des Verfahrens nach einem der Ansprüche 1-9 ausführt.

12. Computerprogrammprodukt, das, wenn es auf einem Computer ausgeführt wird, den Computer veranlasst, die Schritte des Verfahrens nach einem der Ansprüche 1-9 auszuführen.

## Revendications

1. Procédé de commande pour l'affichage de contenu multimédia, comprenant :
l'affichage (S101) d'un premier contenu multimédia sur une première page ;
en réponse à un changement d'attitude prédéfinie d'un dispositif terminal, le déclenchement d'une première image interactive et d'une seconde image interactive pour basculer sur un effet de transition prédéfini ;
en réponse au changement d'attitude prédéfinie satisfaisant une condition prédéfinie, le basculement (S103) de la première page à une seconde page, la seconde page affichant un second contenu multimédia, le second contenu multimédia étant un contenu d'extension du premier contenu multimédia ; et
en réponse au changement d'attitude du dispositif terminal différent de l'attitude prédéfinie, l'affichage d'un effet d'affichage prédéfini en même temps que le changement d'attitude du dispositif terminal dans la première image interactive sans déclencher l'effet de transition prédéfini ;
dans lequel la condition prédéfinie comprend :
une durée de changement d'attitude prédéfinie égale à une première durée prédéfinie ; ou
le nombre de fois où une première image interactive et une seconde image interactive sont déclenchées pour basculer sur un effet de transition prédéfini étant égal à un nombre de fois prédéfinis, le nombre de fois prédéfinis étant un nombre cumulé de fois pour le basculement sur un effet de transition prédéfini ; ou
une barre de progression correspondant à l'effet de transition prédéfini atteignant son état de barre complète.

2. Procédé selon la revendication 1, dans lequel, en réponse à un changement d'attitude prédéfinie du dispositif terminal, le basculement de la première page à la seconde page comprend :
en réponse à un changement d'attitude prédéfinie du terminal, le basculement de la première page à la seconde page dans le cas où le changement d'attitude prédéfinie satisfait une condition prédéfinie.

3. Procédé selon la revendication 1, dans lequel, avant le basculement de la première page à la seconde page en réponse à un changement d'attitude prédéfinie du dispositif terminal, le procédé comprend en outre :
l'affichage de la première image interactive sur la première page après l'affichage du premier contenu multimédia pendant une seconde durée prédéfinie.

4. Procédé selon la revendication 3, dans lequel une information d'invite est affichée sous une première image interactive affichée sur la première page, et l'information d'invite est utilisée pour indiquer le déclenchement du dispositif terminal pour changer d'attitude prédéfinie.

5. Procédé selon la revendication 1, dans lequel le procédé comprend en outre :
en réponse au déclenchement de la première image interactive ou de la seconde image interactive, le basculement de la première page à une seconde page.

6. Procédé selon la revendication 1, dans lequel le procédé comprend en outre :
en réponse au changement d'attitude prédéfinie du dispositif terminal, le déclenchement du déplacement d'un élément d'interaction cible dans une direction prédéfinie.

7. Procédé selon la revendication 1, dans lequel le changement d'attitude prédéfinie comprend : une inclinaison à un angle prédéfini dans au moins une direction prédéfinie.

8. Procédé selon la revendication 7, dans lequel l'inclinaison à un angle prédéfini dans au moins une direction prédéfinie comprend : l'inclinaison à un angle prédéfini, respectivement, dans une direction vers la gauche et une direction vers la droite ;
la première page affichant, également, une barre de progression vers la gauche et une barre de progression vers la droite ; et
dans lequel, en réponse à un changement d'attitude prédéfinie d'un dispositif terminal, le déclenchement d'une première image interactive et d'une seconde image interactive pour basculer sur un effet de transition prédéfini, comprend :
en réponse à l'inclinaison du dispositif terminal à un angle prédéfini dans une direction vers la gauche, tandis que la première image interactive est inclinée à un angle prédéfini dans une direction vers la gauche, et en réponse au retour du dispositif terminal à une attitude initiale après l'inclinaison à un angle prédéfini dans une direction vers la gauche, le déclenchement de la première image interactive pour basculer vers une seconde image interactive selon un effet de transition prédéfini, la barre de progression vers la gauche se remplissant selon une progression prédéfinie ; et
en réponse à l'inclinaison d'un dispositif terminal à un angle prédéfini dans une direction vers la droite, tandis que la seconde image interactive est inclinée à un angle prédéfini dans une direction vers la droite, et en réponse au retour du dispositif terminal à une attitude initiale après l'inclinaison à un angle prédéfini dans une direction vers la droite, le déclenchement du basculement de la seconde image interactive vers la première image interactive selon un effet de transition prédéfini, la barre de progression vers la droite se remplissant selon une progression prédéfinie ; et
dans lequel la condition prédéfinie comprend : la barre de progression vers la gauche et la barre de progression vers la droite étant toutes deux remplies.

9. Procédé selon la revendication 1 ou 2, dans lequel, avant le basculement de la première page à la seconde page en réponse à un changement d'attitude prédéfinie du dispositif terminal, le procédé comprend en outre :
la détermination du changement d'attitude prédéfinie du dispositif terminal par un gyroscope du dispositif terminal.

10. Dispositif électronique comprenant : un processeur pour exécuter un programme informatique stocké dans une mémoire qui, lorsqu'il est exécuté par le processeur, réalise les étapes du procédé selon l'une quelconque des revendications 1-9.

11. Support de stockage lisible par ordinateur contenant un programme informatique qui, lorsqu'il est exécuté par un processeur, réalise les étapes du procédé selon l'une quelconque des revendications 1-9.

12. Produit de programme informatique qui, lorsqu'il est exécuté sur un ordinateur, amène l'ordinateur à réaliser les étapes du procédé selon l'une quelconque des revendications 1-9.
